# EUROPÄISCHE PATENTSCHRIFT

(11) **EP 0 463 029 B1**
(45) Veröffentlichungstag und Bekanntmachung des Hinweises auf die Patenterteilung: **09.06.1993**
(21) Anmeldenummer: 90904616.1
(22) Anmeldetag: 16.03.1990
(51) Int. Cl.: G01K 11/04

(54) **FÜLLMEDIUM FÜR FÜHLERSYSTEME VON TEMPERATUR-WEG-GEBERN**
FILLING MEDIUM FOR SENSOR SYSTEMS OF TEMPERATURE AND POSITION SENSORS
MATIERE DE REMPLISSAGE POUR SYSTEMES CAPTEURS DE THERMOMETRES-DETECTEURS DE DEPLACEMENT

(30) Priorität: 16.03.1989 DE 3908551
(43) Veröffentlichungstag der Anmeldung: 02.01.1992
(73) Patentinhaber: HOECHST AKTIENGESELLSCHAFT, 65926 Frankfurt am Main (DE)
(72) Erfinder: PREISEGGER, Ewald, W-6085 Nauheim (DE); SCHOLTEN, Wolfgang, W-6238 Hofheim am Taunus (DE); MÜLLER, Thomas, W-6380 Bad Homburg (DE)
(86) Internationale Anmeldenummer: EP9000429
(87) Internationale Veröffentlichungsnummer: WO9010853

(56) Entgegenhaltungen:
- EP-A- 0 039 471
- EP-A- 0 117 580
- DE-A- 2 334 125
- US-A- 2 639 189
- US-A- 2 753 270
- WPIL, File Supplier, AN=80-83722C(47), Derwent Publications Ltd, London, GB;& JP-A-55131096

## Beschreibung

Mechanische Schaltelemente mit einstellbarem Temperaturbereich, sogen. Temperatur-Weg-Geber wie Thermostate in Haushaltskühl- und Gefriergeräten, in Gas - oder elektrisch beheizten Brauchwassererwärmern oder in Warmwasserheizungssystemen bestehen aus einem Fühlerelement, das über ein Kapillarrohr mit einem Metallfaltenbalg verbunden ist. Fühlerelement, Kapillarrohr und Metallfaltenbalg - nachstehend "Fühlersystem" genannt - ist mit einem Füllmedium, in der Regel einem unter Druck verflüssigten Gas, gefüllt. Erwärmt sich nun das z. B. im Brauchwassererwämer angebrachte Fühlerelement und damit auch das Füllmedium, steigt dessen Dampfdruck, wodurch eine Ausdehnung des Metallfaltenbalgs in Längsrichtung bewirkt wird. Diese Ausdehnung wird nun dazu benutzt, über eine entsprechende bekannte Anordnung, ein Ventil zu betätigen oder einen Schaltvorgang direkt oder über ein angesteuertes Schaltschütz auszulösen. Durch Veränderung einer Federvorspannung, die auf den Metallfaltenbalg wirkt, kann nun erreicht werden, daß der Schaltvorgang bei höherem oder niedrigerem Dampfdruck im Fühlersystem entsprechend einer höheren oder niedrigeren Temperatur ausgelöst wird. Je nach Anwendungsfall, d. h. je nach Temperaturbereich, innerhalb dessen die Schalttemperatur veränderbar sein soll, ist nun ein geeignetes Füllmedium mit passender Dampfdruck-/Temperaturabhängigkeit erforderlich, damit einerseits die konstruktiven Anforderungen hinsichtlich Druckbelastbarkeit und Federvorspannung vertretbar sind, andererseits aber ein genügend großer Quotient δp/δt zur Sicherstellung einer möglichst geringen Schalt-Hysterese zwischen Aufheiz- und Abkühlvorgang vorhanden ist.

Als Füllmedium für Temperatur-Weg-Geber ißt Schwefeldioxid bekannt. Wenn auch die Füllmengen pro Füllsystem relativ gering sind (je nach Typ des Schaltelementes zwischen ca. 2 und 5 g), so besteht aufgrund der ungünstigen physiologischen Eigenschaften von SO₂ im Falle einer Beschädigung des Fühlersystems sowie vor allem bei der Fertigung der Fühlersysteme ein gewisses Risiko. Außerdem besteht Kennzeichnungspflicht (Hinweis auf SO₂).

Die Aufgabe zu vorliegender Erfindung besteht demnach darin, ein Füllmedium für Fühlersysteme von Temperatur-Weg-Gebern zu finden, das nahezu das gleiche Betriebsverhalten zeigt, aber die aufgezeigten Nachteile nicht aufweist.

Die Aufgabe wird durch Verwendung von 2H-Heptafluorpropan (H-FKW 227) gelöst.

H-FKW 227 zeigt nahezu das gleiche Betriebsverhalten wie SO₂, ist chemisch weitgehend inert und weist in dem in Frage kommenden Temperaturbereich (ca. -30 bis +100°C) eine sehr gute Werkstoffverträglichkeit mit allen für Fühlersysteme üblicherweise eingesetzten metallischen Werkstoffen auf.

## Patentansprüche

1. Verwendung von 2H-Heptafluorpropan als Füllmedium für Fühlersysteme von Temperatur-Weg-Gebern.

## Claims

1. Use of 2H-heptafluoropropane as filler for sensor systems of temperature-sensitive displacement pickups.

## Revendications

1. Emploi de 2H-heptafluoropropane en qualité de milieu de remplissage pour systèmes palpeurs de capteurs de température-déplacement.
